(19) Europäisches Patentamt
European Patent Office
Office européen des brevets

(11) **EP 1 872 085 B1**

(12) **EUROPÄISCHE PATENTSCHRIFT**

(45) Veröffentlichungstag und Bekanntmachung des Hinweises auf die Patenterteilung:
**10.09.2008 Patentblatt 2008/37**

(51) Int Cl.:
*G01B 5/008* *(2006.01)*    *G01B 11/03* *(2006.01)*

(21) Anmeldenummer: **06707199.3**

(86) Internationale Anmeldenummer:
**PCT/EP2006/001640**

(22) Anmeldetag: **23.02.2006**

(87) Internationale Veröffentlichungsnummer:
**WO 2006/094641 (14.09.2006 Gazette 2006/37)**

(54) **VERFAHREN ZUR MESSUNG VON STRUKTUREN EINES OBJEKTS**

METHOD FOR MEASURING STRUCTURES OF AN OBJECT

PROCEDE POUR MESURER DES STRUCTURES D'UN OBJET

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **11.03.2005 DE 102005011258**

(43) Veröffentlichungstag der Anmeldung:
**02.01.2008 Patentblatt 2008/01**

(73) Patentinhaber: **Forschungszentrum Karlsruhe GmbH**
**76133 Karlsruhe (DE)**

(72) Erfinder:
• **THELEN, Richard**
**76133 Karlsruhe (DE)**
• **SCHULZ, Joachim**
**76137 Karlsruhe (DE)**
• **JANSSEN, Achim**
**47608 Geldern (DE)**

(56) Entgegenhaltungen:
**EP-A- 0 965 816        EP-B- 0 988 505**
**US-A- 5 615 489**

• **E.J.C. BOS, F.L.M. DELBRESSINE, H. HAITJEMA: "High-Accuracy CMM Metrology for Micro Systems" PROCEEDINGS OF THE 8TH SYMPOSIUM ON MEASUREMENT AND QUALITY CONTROL IN PRODUCTION, ISMQC 2004, ERLANGEN, Oktober 2004 (2004-10), XP002377156 Gefunden im Internet: URL:http://www.mate.tue.nl/mate/pdfs/4906. pdf>**
• **H. SCHWENKE, F. HÄRTIG, K. WENDT, F. WÄLDELE: "Future Challenges in Co-Ordinate Metrology: Addressing Metrological Problems for very Small and very Large Parts" PROCEEDINGS OF IDW WORKSHOP 2001, KNOXVILLE, XP002377155 Gefunden im Internet: URL:http://www.ptb.de/de/org/5/53/texte/pt b_idw_2001.pdf>**

**EP 1 872 085 B1**

## Beschreibung

Die Erfindung betrifft ein Verfahren zur Messung von Strukturen eines Objekts.

Die EP 0 988 505 B1 offenbart ein Verfahren zur Messung von Strukturen eines Objekts mittels eines Tastelements, das, von einer Tasterverlängerung ausgehend, einem Koordinatenmessgerät zugeordnet ist, bei dem das Tastelement mit dem Objekt in Berührung gebracht wird, ein Bild des Tastelements auf einem Sensorfeld eines optischen Sensors aufgenommen wird und die Position des Tastelements bestimmt wird, indem Koordinaten des Bildes des Tastelements mit denen des Koordinatenmessgeräts verknüpft werden.

Weiterhin offenbart die EP 0 988 505 B1 eine Vorrichtung zur Messung von Strukturen eines Objekts mit einem Tastelement, das von einer Tasterverlängerung ausgeht, einem optischen Sensor zur Aufnahme eines Bildes des Tastelements auf einem Sensorfeld, und einer Auswerteeinheit, mit der aus der Position des optischen Sensors zum Koordinatensystem eines Koordinatenmessgeräts und mittels des optischen Sensors gemessenen Position des Tastelements die Strukturen berechenbar sind.

Mit diesem Verfahren lassen sich die mechanischen Größen einer Struktur mit einer Genauigkeit oberhalb von 0,5 $\mu$m bis 1 $\mu$m messen. Für höhere Genauigkeit beeinflussen das Reflektionsverhalten der Strukturen des Objekts und des Tastelements das Messergebnis.

Ausgehend hiervon ist es die Aufgabe der vorliegenden Erfindung, ein Verfahren zur Messung von Strukturen eines Objekts vorzuschlagen, wobei die Dimensionstoleranzen der Strukturen unterhalb von 1 $\mu$m, bevorzugt unterhalb von 0,5 $\mu$m liegen.

Diese Aufgabe wird durch die Verfahrensschritte des Anspruchs 1 gelöst. Die abhängigen Ansprüche beschreiben vorteilhafte Ausgestaltungen der Erfindung.

Das erfindungsgemäße Verfahren zur Messung von Strukturen eines Objekts mittels eines beleuchteten oder selbstleuchtenden vorzugsweise kugelförmigen Tastelements, das, von einer Tasterverlängerung ausgehend, einem Koordinatenmessgerät zugeordnet ist, umfasst mindestens die folgenden Verfahrensschritte:

a) Das Tastelement wird mit dem Objekt, dessen Strukturen mit einer Genauigkeit unterhalb von 1 $\mu$m, bevorzugt unterhalb von 0,5 $\mu$m vermessen werden sollen, in Berührung gebracht.
b) Ein Bild des Tastelements wird auf einem Sensorfeld eines optischen Sensors aufgenommen.
c) Die optische Position des Tastelements wird bestimmt, indem Koordinaten des Bildes des Tastelements mit denen des Koordinatenmessgeräts verknüpft werden.
d) Aus einem Bereich des durch das Objekt zumindest teilweise abgeschatteten Bildes des Tastelements auf dem Sensorfeld wird der optische Schwerpunkt des zumindest teilweise abgeschatteten Bildes des Tastelements auf dem Sensorfeld bestimmt,
e) Der optische Schwerpunkt des zumindest teilweise abgeschatteten Bildes des Tastelements auf dem Sensorfeld wird dann mit dem optischen Schwerpunkt des Bildes des Tastelements ohne Abschattung durch das Objekt bei gleichem Abstand des Tastelements vom optischen Sensor, insbesondere von dessen Sensorfeld, verglichen.
f) Anschließend wird die Differenz der beiden so bestimmten optischen Schwerpunkte ermittelt.
g) Schließlich wird die physikalische Position des Tastelements aus der optischen Position des Bildes des Tastelements auf dem Sensorfeld und der Differenz der beiden optischen Schwerpunkte bestimmt.

Durch das erfindungsgemäße Verfahren wird berücksichtigt, dass der optische Schwerpunkt des zumindest teilweise abgeschatteten Bildes des Tastelements auf dem Sensorfeld eine größere oder geringere Entfernung des Tastelements vom Objekt vortäuscht. Dies führt zu einem Unterschied zwischen der physikalischen Position des Tastelements und der mittels der optischen Abbildung bestimmten optischen Position des. Bildes des Tastelements auf dem Sensorfeld. Das Vorzeichen, mit dem die Differenz der optischen Schwerpunkte in diese Korrektur eingeht, d.h. ob im Einzelfall eine größere oder geringere Entfernung des Tastelements vom Objekt vorgetäuscht, hängt insbesondere von der Geometrie, den Oberflächeneigenschaften und den optischen Eigenschaften der Seitenwände des Objekts, von der Messtiefe, d.h. dem Abstand des Tastelements von der abschattenden Kante des Objekts, sowie von der Intensität der Beleuchtung des Objekts und des Tastelements ab. Nur eine derartige Korrektur ermöglicht es, die physikalische Position des Tastelements mit einer Genauigkeit unterhalb von 1 $\mu$m, bevorzugt unterhalb von 0,5 $\mu$m zu bestimmen.

Zur Bestimmung des optischen Schwerpunkts des zumindest teilweise abgeschatteten Bildes des Tastelements auf dem Sensorfeld gemäß Verfahrensschritt d) wird im Falle, dass das Bild des Tastelements durch das Objekt nicht überwiegend abgeschattet ist, vorzugsweise ein Bereich des Bildes des Tastelements (Messfenster) zur Bestimmung des optischen Schwerpunkts des zumindest teilweise abgeschatteten Bildes des Tastelements auf dem Sensorfeld herangezogen, der nicht abgeschattet ist.

In einer bevorzugten Ausgestaltung wird die optimale Lage des Messfensters, d.h. des Bereichs des Bildes des Tastelements, der zur Bestimmung des optischen Schwerpunkts des zumindest teilweise abgeschatteten Bildes des Tastelements auf dem Sensorfeld herangezogen wird, dadurch ermittelt, dass zunächst das Messfenster so gelegt wird, dass es das Bild des Tastelements vollständig abdeckt und danach zumindest eine Kante des Messfensters orthogonal zum berührten Objekt sukzessive solange verschoben wird, bis die Formtoleranz des Bildes des Tastelementes gerade unter einen festgelegten Werts sinkt. Diese Ausgestaltung ist besonders vorteilhaft bei einer Automatisierung des Verfahrens.

In einer besonders bevorzugten Ausgestaltung werden Werte für eine Vorpositionierung des Messfensters über die Bestimmung der Abschattung über eine Simulation des Schattenwurfs ermittelt. Diese Simulation erfolgt entweder unter der Annahme, dass das Tastelement selbst strahlt (Eigenlicht) oder von einer dem Sensor gegenüberliegenden Position beleuchtet wird (Durchlicht).

In einer weiteren vorteilhaften Ausgestaltung werden geometrische Daten (CAD-Daten) des Objekts, die z. B. aus dessen Konstruktion bekannt sind, zur Bestimmung des lokalen Schattenwurfs einbezogen. Das Ziel dieser Maßnahmen ist es, die lokalen Verhältnisse bestmöglich zu beschreiben, um ein möglichst genaues Messergebnis zu erhalten.

Für eine Simulation ist der Einfluss unebener Seitenwände auf den auszuwertenden Bereich der Abbildung des Tastelements im Sensorfeld zu berücksichtigen. Die Bedingungen für Messungen, die zwischen zwei nicht parallelen Objektwänden einer geschlossenen Kontur mit geringem Abstand durchgeführt werden, sind besonders ungünstig, da nur ein nicht überwiegender Teil der Kugel frei in den Raum abstrahlt, während der Anteil der übrigen Strahlung im Tastelement erheblich von den Oberflächenkennwerten abhängt. Für drei Grenzfälle ist das austretende Licht fast homogen verteilt, und zwar

- wenn die Wände eine entsprechend gleichmäßige Struktur aufweisen, d.h. wenn die Wand das Objekt komplett umschließt und die Messtiefe im Vergleich zur Differenz zwischen Tastelementdurchmesser und Objektwandabstand groß ist, wie z. B. bei einer Zylinderbohrung mit hohem Aspektverhältnis, oder
- wenn ein enger Spalt mit annähernd parallelen Wänden vermessen wird, d.h. wenn der Abstand der beiden Wände nicht wesentlich größer ist als der Durchmesser des Tastelements, oder
- wenn die Strukturen so schmal sind, dass sich das Eigenlicht eines kugelförmigen Tastelements fast homogen im Raum ausbreiten kann. Daher lassen sich Objekte wie kleine freistehende Säulen mit hohem Aspektverhältnis oder scharfe Kanten wie eine senkrecht stehende Rasierklinge mit besonders geringem Fehler vermessen.

Neben dem Verlauf der Objektwand an der Messstelle ist es darüber hinaus wichtig, bei Messungen unterhalb der Objektkante festzustellen, ob die Wand überwiegend reflektiert, transmittiert oder absorbiert oder ob eine Mischung zwischen diesen Eigenschaften auftritt. Dies bestimmt die Richtung der Verschiebung zwischen dem optischen Schwerpunkt des Bildes des Tastelements auf dem Sensorfeld und physikalischen Schwerpunkt des Tastelements und lässt sich ebenfalls über eine Simulation berechnen.

Zur Bestimmung des optischen Schwerpunkts des zumindest teilweise abgeschatteten Bildes des Tastelements auf dem Sensorfeld gemäß Verfahrensschritt d) wird im Fall, dass das Bild des Tastelements durch das Objekt überwiegend oder vollständig abgeschattet ist, vorzugsweise ein Bereich des Bildes des Tastelements (Messfenster) herangezogen, der das Bild des Tastelements überwiegend oder vollständig abdeckt.

Auch in diesem Falle ist es besonders vorteilhaft, auf Ergebnisse der Simulation der Lichtverteilung zurückzugreifen. Dies ermöglicht, ein Messfenster über das vollständige Bild des Tastelements auf dem Sensorfeld zu ziehen und die Lage des optischen Schwerpunktes mittels Software zu ermitteln.

In einer besonderen Ausgestaltung der Erfindung wird das Tastelement derart beleuchtet, dass sich auf dem Tastelement eine Lichtspur ausbildet, die, sobald das Objekt beginnt, das Bild des Tastelements auf dem Sensorfeld abzuschatten, verkürzt wird. Damit wird sofort angezeigt, welcher Bereich unter den gegebenen Bedingungen ganz oder teilweise im Schatten liegt, so dass sich die Kante des Messfensters sehr einfach durch das Ende der Lichtspur festlegen lässt. Anschließend erfolgt eine Feinjustage über eine sukzessive Verschiebung der einen Messfensterkante um den Anfang der Lichtspur. Vorzugsweise verläuft die Lichtspur orthogonal zur Objektkante sowie durch den Mittelpunkt des Bildes des Tastelements. Vorteilhaft an dieser Ausgestaltung ist, dass Berechnungen und Simulationen ganz oder teilweise entfallen können und die Montage des Sensors nicht exakt strahlengangmittig zentriert für die Richtung parallel zur Lichtspur erfolgen muss. Daher besteht auch kein negativer Einfluss durch Antasten.

In einer weiteren vorteilhaften Ausgestaltung wird die Position der Lichtspur relativ zum Sensor in Bezug auf Lage und Ausrichtung variiert. Dadurch wird es möglich, den Einfluss komplexer Geometrien auf die Schattenbildung bei Messungen einfach zu untersuchen. Die Differenz zwischen dem Schatten am Äquator und auf einer Linie über dem Pol des Bildes eines kugelförmigen Tastelements wird so deutlich und kann direkt zur Bestimmung der Ausgangslage für das Messfenster unter Berücksichtigung des Radius des Bildes des Tastelements und der numerischen Apertur verrechnet werden. Bevorzugt erfolgt die Bestimmung der Position der Kante des Messfensters derart, dass das Ende der Lichtspur unter Berücksichtigung des aperturbedingten Winkels auf den Äquator des vorzugsweise kugelförmigen Bildes des Tastelements projiziert wird.

Der so ermittelte optische Schwerpunkt des zumindest teilweise abgeschatteten Bildes des Tastelements auf dem Sensorfeld wird nun laut Verfahrensschritt e) mit dem optischen Schwerpunkt des nicht abgeschatteten Bildes des Tastelements bei gleichem Abstand des Tastelements vom optischen Sensor (Sensorfeld) verglichen. Dabei ist es nicht erforderlich, nach jeder Bestimmung des optischen Schwerpunkts des zumindest teilweise abgeschatteten Bildes des Tastelements auch tatsächlich den optischen Schwerpunkt des nicht abgeschatteten Bildes des Tastelements zu ermitteln. Vielmehr genügt es, wenn auf bereits aufgenommene oder berechnete, simulierte und tabellierte oder auf hieraus interpolierte Werte zurückgegriffen wird.

Schließlich wird gemäß Verfahrensschritt g) die optische Position des Bildes des Tastelements auf dem Sensorfeld um die Differenz der beiden auf die angegebenen Weisen ermittelten optischen Schwerpunkte korrigiert, um die gewünschte physikalische Position des Tastelements zu erhalten. Damit wird es möglich, Messergebnisse mit einer Genauigkeit unterhalb von 1 $\mu$m, bevorzugt unterhalb von 0,5 $\mu$m, besonders bevorzugt unterhalb von 0,3 $\mu$m zu erhalten.

Zur Durchführung des erfindungsgemäßen Verfahrens eignet sich jede Vorrichtung zur Messung von Strukturen eines Objekts mit einem beleuchteten oder selbstleuchtenden vorzugsweise kugelförmigen Tastelement, das von einer Tasterverlängerung ausgeht, einem optischen Sensor zur Aufnahme eines Bildes des Tastelements auf einem Sensorfeld, und einer Auswerteeinheit, mit der aus der Position des optischen Sensors zum Koordinatensystem eines Koordinatenmessgeräts und mittels des optischen Sensors gemessenen Position des Tastelements die Strukturen berechenbar sind.

Es wird darüber hinaus vorgeschlagen, dass eine derartige Vorrichtung darüber hinaus Mittel aufweist, die in der Lage sind, eine Lichtspur auf dem Tastelement zu erzeugen, die gegenüber der vorhandenen Beleuchtung auf dem Tastelement unterscheidbar, d.h. heller oder dunkler ist. Vorzugsweise ist hierfür ein Laser vorgesehen, der scannend mittels der eingesetzten Optik eine Lichtspur auf das Tastelement zeichnet. Alternativ ist eine Blende, insbesondere eine Halbblende oder eine Schlitzblende geeignet.

Die Erfindung wird im Folgenden anhand von Ausführungsbeispielen erläutert. Die Figuren zeigen im Einzelnen:

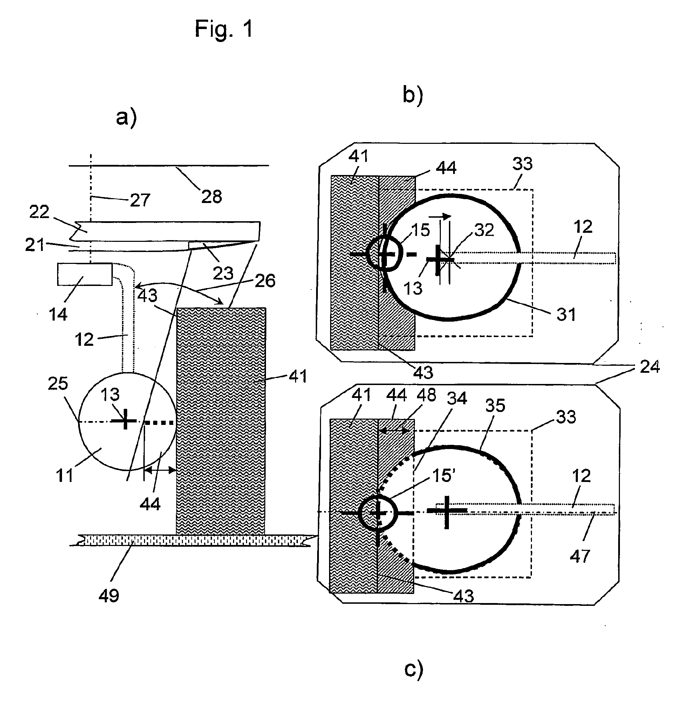

Fig. 1 Schematische Darstellung des Verfahrens bei nicht überwiegender Abschattung des Bildes des Tastelements auf dem Sensorfeld durch die Kante eines zu untersuchenden Objekts:

a) Seitenansicht
b) Aufsicht **ohne** Korrektur der bestimmten Position des Bildes des Tastelements
c) Aufsicht **mit** Korrektur der bestimmten Position des Bildes des Tastelements

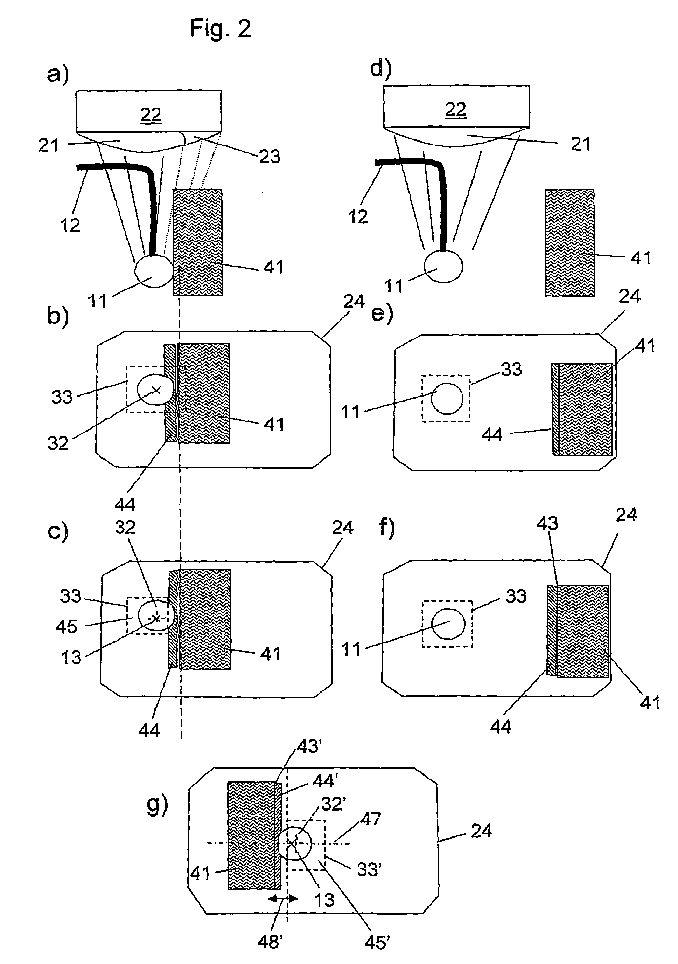

Fig. 2 Ablauf des Verfahrens bei nicht überwiegender Abschattung des Bildes des Tastelements auf dem Sensorfeld durch die Objektkante:

a) Seitenansicht
b) Aufsicht mit Bestimmung des optischen Schwerpunkts des **teilweise** abgeschatteten Bildes des Tastelements **ohne** Korrektur der Messfenster-Position
c) Aufsicht mit Bestimmung des optischen Schwerpunkts des **teilweise** abgeschatteten Bildes des Tastelements mit Korrektur der Messfenster-Position
d) Vergleichsmessung des nicht abgeschatteten Bildes des Tastelements bei gleichem Abstand vom optischen Sensor
e) + f) Aufsicht mit Bestimmung des optischen Schwerpunkts des **nicht** abgeschatteten Bildes des Tastelements
g) Aufsicht mit Bestimmung des optischen Schwerpunkts des teilweise abgeschatteten Bildes des Tastelements **mit** Korrektur der Messfenster-Position auf der gegenüberliegenden Seite des Objekts zur Bestimmung der Seitenwandstärke des Objekts

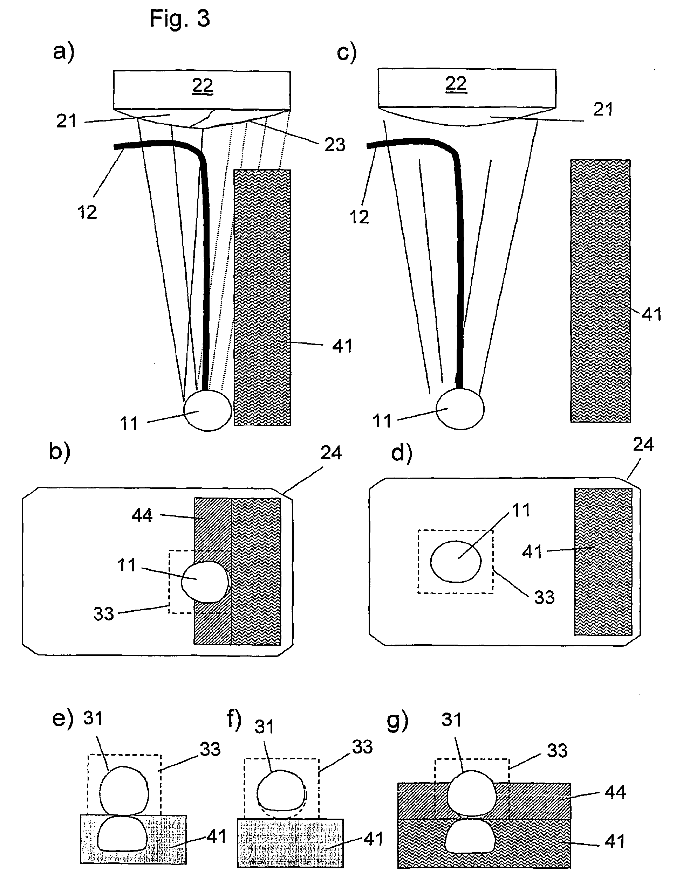

Fig. 3 Ablauf des Verfahrens bei **überwiegender** Abschattung des Bildes des Tastelements durch die Kante des zu untersuchenden Objekts:

a) Seitenansicht
b) Aufsicht mit Bestimmung des optischen Schwerpunkts des ü**berwiegend** abgeschatteten Bildes des Tastelements
c) Vergleichsmessung des nicht abgeschatteten Bildes des Tastelements bei gleichem Abstand vom optischen Sensor
d) Aufsicht mit Bestimmung des optischen Schwerpunkts des nicht abgeschatteten Bildes des Tastelements
e) - g) Simulation des Einflusses der Objektwand auf das Bild des Tastelements bei unterschiedlichen Materialeigenschaften und Geometrien:
e) mit überwiegender Reflexion
f) mit überwiegender Absorption oder Transmission
g) Mischform, sowohl absorbierend als auch reflektierend.

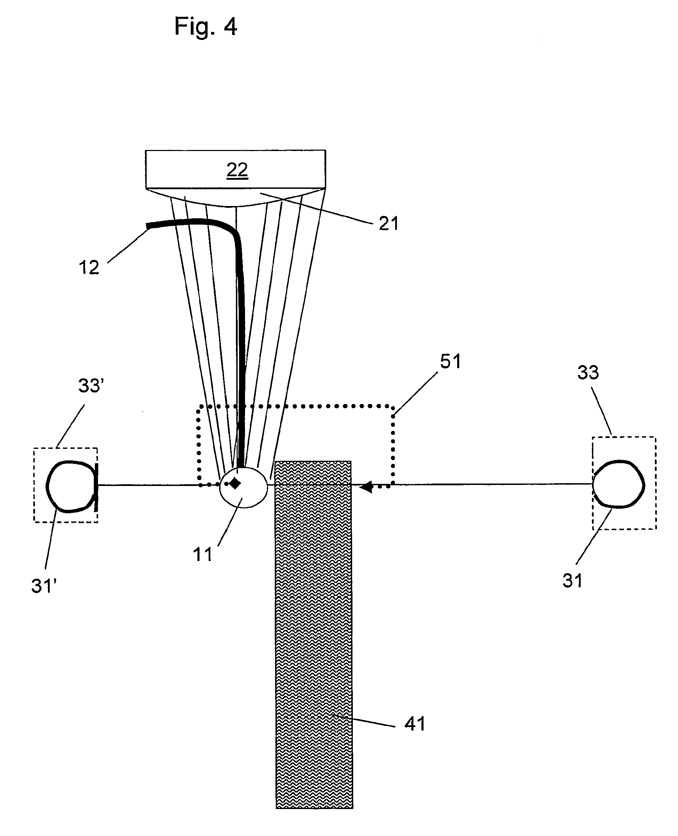

Fig. 4 Messung **geringfügig unterhalb** der Kante des Objekts mit ebener Seitenwand unter Kugel-Eigenlicht:
Seitenansicht mit Tastelement und Fahrspur sowie Aufsicht auf das Messfenster im Sehfeld des Sensorfelds mit ausgewähltem Bild des Tastelements ohne Korrektur (links) bzw. mit Korrektur (rechts).

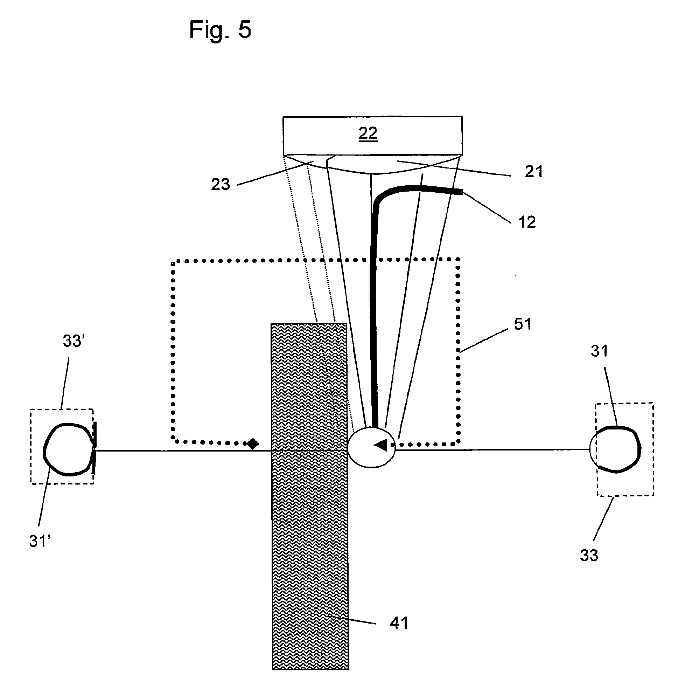

Fig. 5 Messung **deutlich unterhalb** der Kante des Objekts mit ebener Seitenwand unter Kugel-Eigenlicht:

Seitenansicht mit Tastelement und Fahrspur sowie Aufsicht auf das Messfenster im Sehfeld des Sensorfelds mit ausgewähltem Bild des Tastelements ohne Korrektur **(links)** bzw. mit Korrektur **(rechts).**

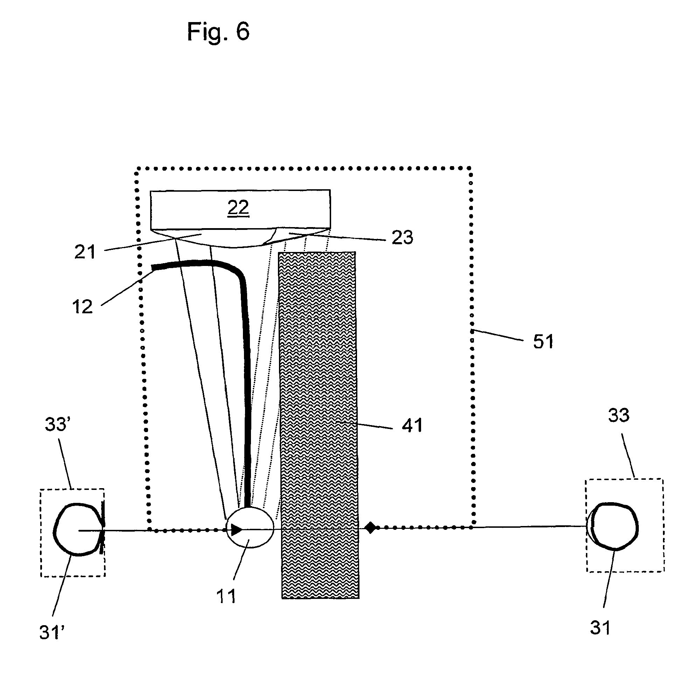

**Fig. 6**     Messung **überwiegend im Schatten** der Kante des Objekts mit ebener Seitenwand unter Kugel-Eigenlicht;
Seitenansicht mit Tastelement und Fahrspur sowie Aufsicht auf das Messfenster im Sehfeld des Sensorfelds mit ausgewähltem Bild des Tastelements ohne Korrektur **(links)** bzw. mit Korrektur **(rechts).**

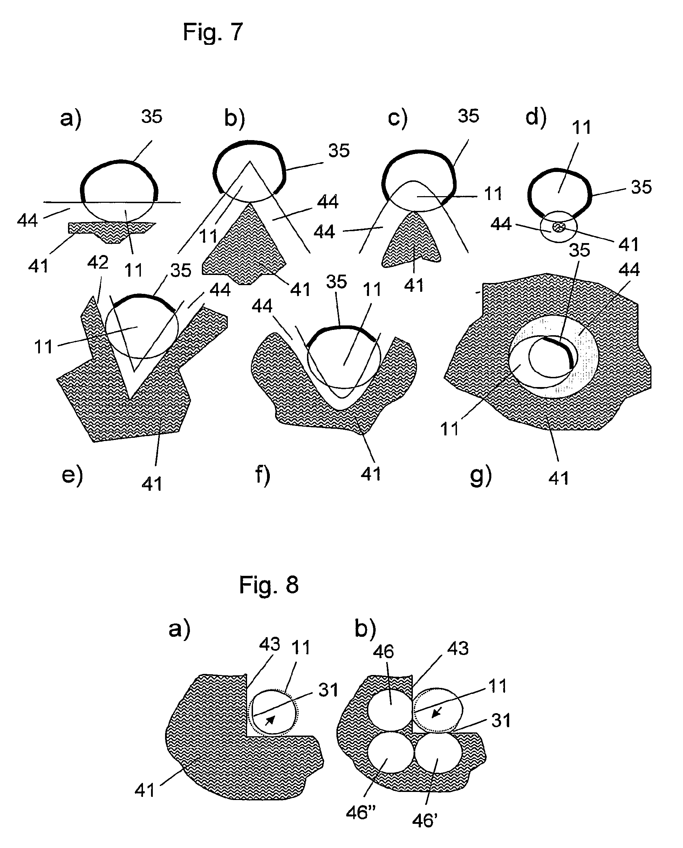

**Fig. 7**     Einfluss der Form der Wände des zu untersuchenden Objekts auf das Bild des Tastelements im Sensorfeld:

      **a)** ebene Wand
      **b)** Wand mit spitzem Winkel
      **c)** Wand mit abgerundetem spitzen Winkel
      **d)** Wand mit hoher Krümmung
      **e)** Wand mit stumpfem Winkel
      **f)** Wand mit abgerundetem stumpfen Winkel
      **g)** Wand, die das Tastelement in geringem Abstand vollständig umgibt

**Fig. 8**     Einfluss der Oberfläche des Objekts auf das Bild des Tastelements im Sensorfeld:

      **a)** im Falle einer absorbierenden Wand
      **b)** im Falle einer reflektierenden Wand

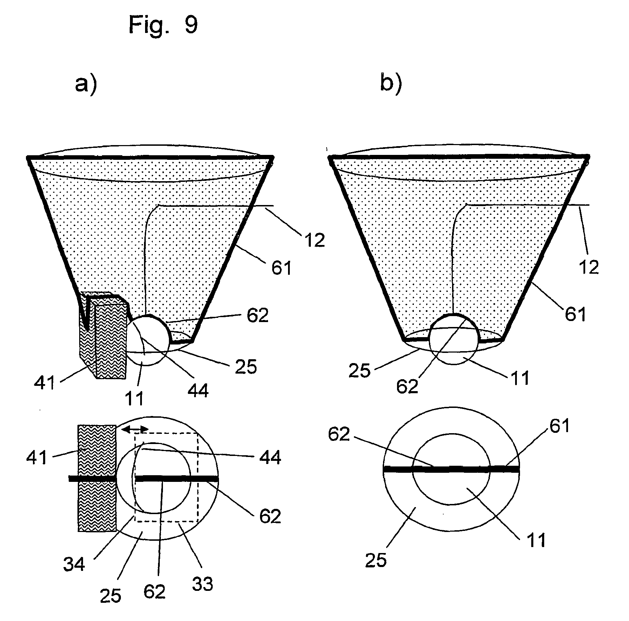

**Fig. 9**     Verfahren mit Beleuchtung des **teilweise** abgeschatteten Bildes des Tastelements auf dem Sensorfeld und der hierauf gebildeten Lichtspur:

      **a)** Seitenansicht des beleuchteten, teilweise abgeschatteten Tastelements und Aufsicht der durch den Schatten des Objekts verkürzten Lichtspur im Bild des Tastelements im Sensorfeld
      **b)** Seitenansicht des beleuchteten, nicht abgeschatteten Tastelements und Aufsicht der nicht verkürzten Lichtspur im Bild des Tastelements im Sensorfeld zum Vergleich

Die Messungen wurden an einer kommerziell erhältlichen optisch taktilen Messvorrichtung durchgeführt. Als Tastelement 11 wurde jeweils eine Kugel mit einem Durchmesser von 108 μm eingesetzt. Mit Hilfe des erfindungsgemäßen Verfahrens konnte dabei die Messgenauigkeit von 0,6 μm für 25 Wiederholmessungen auf 0,1 μm für 25 Wiederholmessungen gesteigert werden. Ein derartiger Wert ist erforderlich, um bei der Produktion von Mikrostrukturen eine Abweichung der Strukturen vom Sollwert um höchstens 0,5 μm gewährleisten zu können. Diese hohe Genauigkeit eröffnet neue Anwendungsgebiete für die Mikrostrukturtechnik.
Da sich die bevorzugten Verfahrensvarianten bei überwiegender oder vollständiger bzw. bei nicht überwiegender Abschattung im Detail unterscheiden, werden im Folgenden beide Fälle separat beschrieben. Die Grenze für den Einsatz der Verfahrensvariante bei nicht überwiegender Abschattung liegt im Falle eines kugelförmigen Tastelements mit dem Radius R bei

$$Z \; < \; 1/n_A \; \cdot \; R,$$

wobei Z die senkrechte Komponente des Abstands des physikalischen Schwerpunkts des Tastelements von der Kante des Objekts und $n_A$ die numerische Apertur der das Tastelement abbildenden Optik bedeutet. Für $Z > 1/n_A \cdot R$ liegt der überwiegende Teil des Tastelements im Schatten der Kante des Objekts.

**Ablauf des Verfahrens bei nicht überwiegender Abschattung des Bildes des Tastelements auf dem Sensorfeld durch eine Objektkante**

Zunächst erfolgt eine Optimierung der Sensoreigenlichtregelung durch Verschiebung des Einkoppelpunktes in der Aufhängung. Hierzu wird die Kugel **11** zur Fokalebene **25** und zur optischen Achse **27** des Sensorsystems mittels einer Halterung **14** mit 5 Freiheitsgraden justiert. Damit ergibt sich eine bessere Regelbarkeit der aus der Kugel **11** austretenden Lichtmenge.
Als nächstes wird das Licht der als Tastelement dienenden Kugel **11** kalibriert, wobei die Kalibrierung über die Hintergrundstrahlung erfolgt. Ziel ist es, die von der Kugel **11** abgestrahlte oder reflektierte Lichtmenge nach Einbau, Umbau oder Wechsel der Kugel **11** so einzustellen, dass einerseits die auf dem Sensorfeld **28** des optischen Sensors auftreffende Lichtmenge ausreicht, um einen guten Kontrast mit der Umgebung zu bilden, andererseits aber nicht so hoch ist, dass das auftreffende Licht die Elemente des Sensorfelds **28** in die Sättigung treibt, wodurch eine genaue Konturbestimmung erschwert wird. Hierzu wird die Kugel **11** auf eine definierte Höhe über den Messtisch gefahren. Dabei darf sich rundherum kein weiteres Element befinden, das die am Sensor auftreffende Strahlung beeinflusst. Dann wird die Beleuchtung durch die transparente Tischplatte auf einen bestimmten Wert gesetzt; die Kugel **11** erscheint als schwarzer Schatten vor einem hellen Hintergrund. Die Beleuchtung der Kugel **11** wird solange erhöht, bis ihr Helligkeitswert auf dem Sensorfeld **28** der Hintergrundstrahlung entspricht, so dass die Kugel **11** vom Hintergrund nicht mehr unterscheidbar ist.
Dann wird der Einfluss der Vorderkante **43** des Objekts **41** auf die montierte Kugel **11** bestimmt. Die Kugel **11** hat einen Durchmesser von 108 μm, die zu bestimmende Dicke der Wand **42** einer als Objekt **41** dienenden Mikrostruktur auf einem Träger **49** aus Silizium ist in 100 μm Tiefe zu messen. Unter der Voraussetzung, dass die Vorderkante **43** zur Kugel **11** hin ideal scharf ist und keine Verrundung aufweist, ergibt sich, dass theoretisch 19,8 μm der Kugel **11** im Schatten **44** der Vorderkante **43** liegen. Dieser Wert lässt sich aus der folgenden Betrachtung ermitteln: Ist die Wand **42** eine senkrechte Ebene, so erzeugt sie einen aperturbedingten Schatten von 0,2· 100 μm = 20 μm in der Abbildung der Kugel **11** auf dem Sensorfeld **28,** vermindert um den Einfluss des Hinterschnitts von -2 μm/mm, was bei einer Messtiefe von 100 μm einen Wert von -0,2 μm bedeutet.

Damit bleiben bei einem Durchmesser der Kugel **11** von 108 μm ca. 88 μm des Durchmessers außerhalb des Schattens **44.** In der Praxis liegt dieser Wert etwas höher, da auch der geringfügig im Schatten **44** liegende Bereich der Kugel **11** noch genügend Licht emittiert, das nach oben austritt und vom Sensorfeld **28** erfasst werden kann.

Die Simulation der Schattenbreite zeigt, dass damit eine ausreichend genaue Messung gegeben ist, weil sich aus der Umrechnung des Schattens bezogen auf die Sensorgröße der Anteil **35** der Kugelkante **43,** der außerhalb des Schattens **44** im Sensorfeld **28** abgebildet wird, über trigonometrische Verknüpfungen bestimmen lässt. Bei 10-facher Vergrößerung ist die Kugel **11** genügend groß, so dass im Sehfeld **24** eine sinnvolle Anzahl Pixel des Sensorfeldes **28** für die Bestimmung des optischen Schwerpunktes **32** der Kugel **11** zur Verfügung steht.

Durch diese Berechnung ist festgelegt, welcher Anteil des Bildes auf dem Sensorfeld **28** auszuwerten ist und an welcher Position im Sensorfeld **28** dieser Anteil liegt, um den Schwerpunkt **13** der Kugel **11** möglichst fehlerarm bestimmen zu können.

Jetzt wird die Kugel **11** an die Wand **42** des Objekts **41** herangefahren, bis die Kugel **11** leicht ausgelenkt wird. Ein Messfenster **33,** das festlegt, welcher Anteil des Bildes der Kugel **11 im** Sensorfeld **28** ausgewertet wird, wird entsprechend der vorherigen Simulation gewählt. Dabei ist es vorteilhaft, wenn das Messfenster **33** symmetrisch und orthogonal zur Symmetrieachse **47** durch die zu vermessende Struktur des Objekts **41** und den optischen Schwerpunkt **32** der Kugel **11** verläuft.

Zur Kontrolle wird bei der Messung durch die Verschiebung der Vorderkante **34** eines Messfensters **33** relativ zum Objekt **41** überprüft, wann für die gegebene Elementargeometrie, hier ein Kreis, die Formtoleranz bei weiterer Verschiebung des Messfensters **33** orthogonal zur berührten Wand **42** dazu führt, dass die Formtoleranz des berechneten Kreises um mehr als 0,05 μm ansteigt. Sie liegt dann über dem Wert, der erreicht wird, wenn der Durchmesser der frei im Raum hängenden Kugel **11,** die komplett innerhalb des Messfensters **33** liegt, bestimmt wird. Dann kann der Abstand des Messfensters **33** zur Wand **42** des Objekts **41** wieder verringert werden, bis die Formtoleranz wieder ungefähr derjenigen der freihängenden Kugel entspricht. Das ist der Arbeitspunkt, bei dem die maximale Anzahl der Punkte des Umfangs ausgewertet wird, ohne dass die durch die Abschattung auftretenden Effekte der Änderung der Intensität durch die Schattenzone **23** auf dem Sensorfeld **28** hinter dem Objektiv **22** zu einer Verfälschung der Bestimmung des physikalischen Schwerpunktes **13** der Kugel **11** führen.

Jetzt wird der Schwerpunkt **32** der Kugel **11** aus der Bildverarbeitung über das Sehfeld **24** des Sensorfeldes **28** bestimmt und abgespeichert.

Der zur Bestimmung der Seitenwandstärke des Objekts (Mikrostruktur) **41** erforderliche zweite Schwerpunkt **32'** wird anschließend aus der Bildverarbeitung analog erfasst.

Falls dieser Punkt den gleichen geometrischen Bedingungen unterliegt (identische Seitenwandneigung, Messtiefe, Kantenverrundung usw.) kann ein Messfenster **33'** jetzt entsprechend um den gleichen Betrag **48'** zur anderen Seite der Kugel **11** verschoben werden und liefert dann ein optimales Ergebnis bei der Bestimmung des physikalischen Schwerpunktes **13** der Kugel **11.**

Zur Kontrolle empfiehlt es sich, bei niedriger Formtoleranz das Messfenster **33'** wiederum orthogonal zur Wand **42'** des Objekts **41'** zu verschieben, bis die Formtoleranz wieder steigt. Dann kann der Abstand des Messfensters **33** zur Wand **42** des Objekts **41** wieder verringert werden, bis die Formtoleranz wieder ungefähr derjenigen der freihängenden Kugel entspricht. Dies kann daher nötig sein, weil die realen Vorderkanten **43, 43'** des Objekts **41** nicht ideal und überall gleich sind, sondern um einige μm in Lage und Verrundung variieren. Damit ergibt sich ein neuer Wert für den optimalen Abstand **48'** des Messfensters **33'** zur Wand **43'** des Objekts **41.**

Schließlich werden aus den beiden bestimmten Schwerpunkten **32, 32'** die Berührungspunkte **15, 15'** der Kugel **11** mit den Wänden **42, 42'** des Objekts **41** berechnet. Das entspricht dem Objektmaß an der angetasteten Stelle. Man erhält für eine gegebene Anordnung ohne Messung bei Durchlicht ein optimales, fehlerreduziertes Ergebnis mit minimaler Streuung des Messergebnisses. Dieser Vorteil wird durch Wiederholmessungen bestätigt.

## Ablauf des Verfahrens bei überwiegender Abschattung des Bildes des Tastelements auf dem Sensorfeld durch eine Objektkante

Zunächst erfolgt eine Optimierung der Sensoreigenlichtregelung durch Verschiebung des Einkoppelpunktes in der Aufhängung. Hierzu wird die Kugel **11** zur Fokalebene **25** und zur optischen Achse **27** des Sensorsystems mittels einer Halterung **14** mit 5 Freiheitsgraden justiert. Damit ergibt sich eine bessere Regelbarkeit der aus der Kugel **11** austretenden Lichtmenge.

Als nächstes erfolgt die Kalibrierung des Lichts der als Tastelement dienenden **Kugel 11** wie im obigen Ausführungsbeispiel.

Dann wird der Einfluss der Vorderkante **43** des Objekts **42** auf die montierte Kugel **11** bestimmt. Die Kugel **11** hat einen Durchmesser von 108 $\mu$m, die zu bestimmende Dicke der Wand **42** eines Objekts (Mikrostruktur) **41** auf einem Silizium-Substrat **49** ist in 400 $\mu$m Tiefe zu messen. Unter der Voraussetzung, dass die Vorderkante **43** zur Kugel **11** hin ideal scharf ist und keine Verrundung aufweist, ergibt sich, dass theoretisch 79,2 $\mu$m der Kugel **11** im Schatten **44** der Vorderkante **43** liegen. Dieser Wert lässt sich aus der folgenden Betrachtung ermitteln: Ist die Seitenwand **42** eine senkrechte Ebene, erzeugt sie einen aperturbedingten Schatten von 0,2· 400 $\mu$m = 80 $\mu$m in der Abbildung der Kugel **11** auf dem Sensorfeld **28,** vermindert um den Einfluss des Hinterschnitts von -2 $\mu$m/mm, was bei einer Messtiefe von 100 $\mu$m einen Wert von -0,8 $\mu$m bedeutet.

Aus der Simulation des Schattenwurfes ergibt sich, dass die Kugel **11** überwiegend im Schatten **44** des Objekts **41** liegt. Daher ist die Verschiebung des Messfensters **33** in diesem Fall nicht sinnvoll, weil der Anteil der Umfangslinie, aus dem der Schwerpunkt **32** bestimmt wird, im Verhältnis zur Gesamtumfangslinie zu gering ist. Für eine präzise Messung ist die Berücksichtigung der Effekte durch den Schattenwurf der Vorderkante **43** des Objekts **41** aber nicht vernachlässigbar.

Daher wird die Lichtverteilung durch eine weitere Simulation an der zu messenden Stelle bestimmt und daraus die Korrektur berechnet, die erforderlich ist, um die wahre Position des Schwerpunktes **13** der Kugel **11** zu bestimmen, weil der optische Schwerpunkt **32** und der physikalische Schwerpunkt **13** nicht übereinstimmen. Ebenso wird die gegebenenfalls erforderliche Erhöhung der Intensität des Lichtes aus der Kugel **11** mit einbezogen.

Zur Bestimmung werden Größen herangezogen, die die lokale Geometrie des Objekts **41** beschreiben, aber auch Oberflächenkennwerte des Objekts **41** wie Reflexion, Absorption und Transmission sowie die Lichtverteilung der Kugel **11.**

Aus der Überlagerung von realer Lichtverteilung als Bitmap aus dem Sensorfeld **28** und simulierter Lichtverteilung als Funktion der Oberflächenkennwerte sowie der Geometrie wird die bestmögliche Übereinstimmung ermittelt und die daraus resultierende Korrektur für die Position der Kugel **11** übernommen.

Die so ermittelten Einstellungen für Oberflächenkennwerte werden für weitere Messungen abgelegt.

Damit ist der Berührungspunkt **15** der Kugel **11** mit der Wand **42** des Objekts **41** optimal bestimmt und lokale Einflüsse der Geometrie des Objekts **41** und des Messsystems auf die Messung sind minimiert. Das steigert die Genauigkeit signifikant.

Jetzt wird analog der zweite Punkt der Messung unter optimalen Bedingungen bestimmt.

Schließlich werden aus den beiden bestimmten Schwerpunkten **32, 32'** der Kugel die jeweiligen Berührungspunkte **15, 15'** mit der Wand **42, 42'** des Objekts **41** berechnet. Das entspricht dem Objektmaß an der angetasteten Stelle. Man erhält für eine gegebene Anordnung ohne Messung bei Durchlicht ein optimales Ergebnis mit minimaler Streuung des Messergebnisses. Dieser Vorteil wird durch Wiederholmessungen bestätigt.

**Einfluss nicht ebener Seitenwände auf den auszuwertenden Bereich der Abbildung des Tastelements im Sensorfeld**

Aus den **Fig. 7 e) und f)** ergibt sich, dass die Bedingungen für Messungen, die zwischen zwei Wänden **42, 42'** einer geschlossenen Kontur des Objekts 41 mit geringem Abstand durchgeführt werden, besonders ungünstig sind, weil nur ein nicht überwiegender Teil **35** der Kugel **11** frei in den Raum abstrahlt, während der Anteil der restlichen Strahlung im Sehfeld **24** des Sensors erheblich von den Oberflächenkennwerten des Objekts **41** abhängt. Günstig dagegen ist eine Geometrie, die zwar eine inhomogene Lichtverteilung nicht kompensiert, aber im Vergleich zum Schattenwurf einer geraden Wand **42** den Anteil **35** der Umfangslinie der Kugel **11,** der außerhalb des Schattens liegt, minimiert.

Für die folgenden Grenzfälle ist das austretende Licht fast homogen verteilt:

- Die Wand **42** weist eine gleichmäßige Struktur auf, z.B. umschließt die Wand **42** das Objekt weitgehend oder komplett und die Messtiefe im Vergleich zur Differenz zwischen dem Durchmesser der Kugel **11** und dem Abstand zur Wand **42** des Objekts **41** ist groß, wie z. B. im Fall einer Zylinderbohrung mit hohem Aspektverhältnis (**Fig. 7g**) oder es liegen zwei annährend parallele Wände **42, 42'** vor,

- Die Strukturen des Objekts **41** sind so schmal, dass sich das Licht der Kugel **11** fast homogen im Raum ausbreiten kann (**Fig. 7d**). Daher lassen sich Objekte wie z.B. kleine freistehende Säulen mit hohem Aspektverhältnis oder scharfe Kanten wie z.B. eine senkrecht stehende Rasierklinge mit besonders geringem Fehler vermessen.

**Einfluss der Beschaffenheit der Oberfläche des Objekts auf das Messergebnis**

Bei Messungen unterhalb der Vorderkante **43** des Objekts **41** ist zu berücksichtigen, ob die Wand **42** des Objekts **41** überwiegend transmittiert, absorbiert oder reflektiert oder ob eine Mischung zwischen diesen Eigenschaften auftritt. Wie aus den **Fig. 8 a) und b)** hervorgeht, bestimmt diese Eigenschaft die Richtung der Verschiebung zwischen dem optischem Schwerpunkt **32** und dem physikalischem Schwerpunkt **13** der Kugel **11** und lässt sich ebenfalls über Simulation berechnen.

**Anzeige des Objektschattens auf dem Tastelement mittels einer Lichtspur**

In der **Fig. 9** ist dargestellt, wie eine Vorrichtung, die Mittel aufweist, um einen Lichtschnitt **61** zu erzeugen, eine Lichtspur (Linie) **62** auf der Kugel **11** bildet. Entscheidend ist, dass sich die so auf der Kugel **11** erzeugte Lichtspur **62** von der auf der Kugel **11** bereits vorhandenen Beleuchtung unterscheidet, also heller oder dunkler als diese ist.

Sobald das Objekt **41** beginnt, die Kugel **11** abzuschatten, wird die Lichtspur **62** auf der Kugel **11** verkürzt. Auf diese Weise wird sofort ersichtlich, welcher Bereich der Kugel **11** unter den gegebenen Bedingungen ganz oder teilweise im Schatten liegt, so dass sich das Messfenster **33** einfach durch das Ende der Lichtspur **62** auf Höhe des Äquators der Kugel **11**, d.h. in der Fokalebene **25** der Optik festlegen lässt. Die Feinjustage erfolgt über eine sukzessive Verschiebung der Vorderkante **34** des Messfensters 33 um den Anfang der Lichtspur **62**.

Die Lichtspur **62** verläuft orthogonal zur Vorderkante **43** des Objekts **41** und durch den Schwerpunkt **13** der Kugel **11.** Auf diese Weise kann auf Berechnungen und Simulation verzichtet werden und die Montage der Kugel muss nicht exakt strahlengangmittig zentriert für die Richtung parallel zur Lichtspur **62** erfolgen. Durch Variation der Position der Lichtspur **62** in Bezug auf Lage und Ausrichtung relativ zum Sensorfeld **28** lässt sich der Einfluss komplexer Geometrien auf die Schattenbildung bei Messungen einfach untersuchen. Bei Verschiebung der Lichtspur **62** vom Mittelpunkt bis zum Rand der Kugel **11,** in dem die Lichtspur **62** die Fokalebene **25** der Optik schneidet ist das Ende der Lichtspur **62** die Ausgangsposition für die Wahl der Vorderkante **34** des Messfensters **33**.

Der Lichtschnitt **61** wird mittels eines Lasers erzeugt, der vorzugsweise durch das Objektiv **22** scannend eine Lichtspur **62** auf die Kugel **11** zeichnet. Alternativ wird eine Blende (Halb- oder Schlitzblende) eingesetzt.

**Bezugszeichenliste**

| | |
|---|---|
| **11** | Tastelement (Kugel) |
| **12** | Tasterverlängerung (Faser) |
| **13** | Physikalischer Schwerpunkt der Kugel **11** |
| **14** | Halterung für die Faser (Tasterverlängerung) **12** |
| **15, 15'** | Berührungspunkt der Kugel **11** mit der Wand **42, 42'** des Objekts 41 aus Bilderkennung |
| **21** | Linse |
| **22** | Objektiv |
| **23** | Schattenzone in der Linse **21** |
| **24** | Sehfeld |
| **25** | Fokalebene der Optik |
| **26** | Halbwinkel aus numerischer Apertur |
| **27** | Optische Achse |
| **28** | Sensorfeld des optischen Sensors |
| **31** | Kontur der Kugel **11** aus Bilderkennung |
| **32, 32'** | Schwerpunkt der Kugel **11** aus Bilderkennung |
| **33** | Messfenster zur Bildverarbeitung |
| **34** | Vorderkante des Messfensters **33** zur Bildverarbeitung |
| **35** | Anteil der Kugel **11** im Messfenster **33** ohne Schatten **44** |
| **41** | Objekt |
| **42, 42'** | Wand des Objekts **41** |
| **43, 43'** | Vorderkante des Objekts **41** |
| **44, 44'** | Schatten der Vorderkante **43** des Objekts **41** |
| **45, 45'** | Zone ohne Schatten **44, 44'** durch das Objekt **41** |
| **46, 46', 46''** | Spiegelbild des Objekts **41** |
| **47** | Symmetrieachse durch den Schwerpunkt **13** der Kugel **11** und den optischen Schwerpunkt **32, 32'** der Kugel **11** |
| **48, 48'** | Abstand zwischen Messfenster **33, 33'** und Wand **42, 42'** des Objekts **41** |
| **49** | Träger (Substrat) für das Objekt **41** |
| **51** | Fahrspur der Kugel **11** |
| **61** | Lichtschnitt |
| **62** | Lichtspur auf der Kugel **11** |

**Patentansprüche**

**1.** Verfahren zur Messung von Strukturen eines Objekts (41) mittels eines Tastelements (11), das, von einer Tasterverlängerung (12) ausgehend, einem Koordinatenmessgerät zugeordnet ist, bei dem

a) das Tastelement (11) mit dem Objekt (41) in Berührung gebracht wird,

b) ein Bild des Tastelements (10) auf einem Sensorfeld eines optischen Sensors (28) aufgenommen wird und

c) die optische Position des Tastelements (11) bestimmt wird, indem Koordinaten des Bildes des Tastelements (11) mit denen des Koordinatenmessgeräts verknüpft werden,

**dadurch gekennzeichnet, dass**

d) aus einem Bereich des durch das Objekt (41) zumindest teilweise abgeschatteten Bildes des Tastelements (11) auf dem Sensorfeld (28) der optische Schwerpunkt (32,32') des zumindest teilweise abgeschatteten Bildes des Tastelements (11) auf dem Sensorfeld (28) bestimmt wird,

e) dieser mit dem optischen Schwerpunkt (13) des nicht durch das Objekt abgeschatteten Bildes des Tastelements (11) auf dem Sensorfeld (28) bei gleichem Abstand des Tastelements vom optischen Sensor verglichen wird,

 f) hieraus die Differenz der beiden optischen Schwerpunkte (13, 32, 32') ermittelt wird, und

 g) die physikalische Position des Tastelements (11) aus der optischen Position des Bildes des Tastelements (11) auf dem Sensorfeld (28) und der Differenz der beiden optischen Schwerpunkte (13,32,32') bestimmt wird.

2. Verfahren nach Anspruch 1, **dadurch gekennzeichnet, dass** das Bild des Tastelements auf dem Sensorfeld durch das Objekt nicht überwiegend abgeschattet ist und der Bereich des Bildes des Tastelements auf dem Sensorfeld, der zur Bestimmung des optischen Schwerpunkts des zumindest teilweise abgeschatteten Bildes des Tastelements auf dem Sensorfeld herangezogen wird, nicht abgeschattet ist.

3. Verfahren nach Anspruch 1, **dadurch gekennzeichnet, dass** das Bild des Tastelements auf dem Sensorfeld durch das Objekt überwiegend oder vollständig abgeschattet wird und der Bereich des Bildes des Tastelements auf dem Sensorfeld, der zur Bestimmung des optischen Schwerpunkts des zumindest teilweise abgeschatteten Bildes des Tastelements auf dem Sensorfeld herangezogen wird, zumindest den überwiegenden Teil des Bildes des Tastelements auf dem Sensorfeld abdeckt.

4. Verfahren nach einem der Ansprüche 1 bis 3, **dadurch gekennzeichnet, dass** der Bereich des Bildes des Tastelements auf dem Sensorfeld, der zur Bestimmung des optischen Schwerpunkts des zumindest teilweise abgeschatteten Tastelements herangezogen wird, solange orthogonal zum berührten Objekt verschoben wird, wie die Formtoleranz des Bildes des Tastelementes auf dem Sensorfeld unterhalb eines festgelegten Werts bleibt.

5. Verfahren nach einem der Ansprüche 1 bis 4, **dadurch gekennzeichnet, dass** der Bereich des Bildes des Tastelements auf dem Sensorfeld, der zur Bestimmung des optischen Schwerpunkts des zumindest teilweise abgeschatteten Bildes des Tastelements auf dem Sensorfeld herangezogen wird, über eine Bestimmung der Abschattung aus einer Simulation des Schattenwurfs des Objekts auf das Sensorfeld ermittelt wird.

6. Verfahren nach Anspruch 5, **dadurch gekennzeichnet, dass** geometrische Daten des Objekts und des Tastelements zur Simulation des Schattenwurfs des Objekts auf das Sensorfeld einbezogen werden.

7. Verfahren nach einem der Ansprüche 1 bis 6, **da-**

**durch gekennzeichnet, dass** zur Bestimmung des optischen Schwerpunkts des zumindest teilweise abgeschatteten Bildes des Tastelements auf dem Sensorfeld geometrische Daten oder Oberflächeneigenschaften des Objekts zur Simulation der Lichtverteilung entlang der Wand des Objekts einbezogen werden.

8. Verfahren nach einem der Ansprüche 1 bis 7, **dadurch gekennzeichnet, dass** das Tastelement derart beleuchtet wird, dass auf dem Tastelement eine Lichtspur (62) entsteht, die durch den Schatten (44) des Objekts verkürzt wird, und der Bereich des Bildes des Tastelements auf dem Sensorfeld, der zur Bestimmung des optischen Schwerpunkts des zumindest teilweise abgeschatteten Bildes des Tastelements auf dem Sensorfeld herangezogen wird, durch das Ende der Lichtspur (62) gegeben ist.

9. Verfahren nach Anspruch 8, **dadurch gekennzeichnet, dass** die Lichtspur orthogonal zur Objektkante und durch den Mittelpunkt des Bildes des Tastelements auf dem Sensorfeld verläuft.

10. Verfahren nach einem der Ansprüche 1 bis 9, **dadurch gekennzeichnet, dass** die Werte des optischen Schwerpunkts des nicht abgeschatteten Bildes des Tastelements auf dem Sensorfeld aus einer Tabelle entnommen werden.

11. Verfahren nach Anspruch 10, **dadurch gekennzeichnet, dass** die Werte der Tabelle aus Aufnahmen des Tastelements ohne Abschattung durch das Objekt, aus Berechungen, Simulationen oder aus der Interpolation derartiger Werte gewonnen wurden.

12. Verfahren nach einem der Ansprüche 1 bis 11, **dadurch gekennzeichnet, dass** die Strukturen des Objekts mit einer Genauigkeit unterhalb von 0,5 μm vermessen werden.

**Claims**

1. Method for measuring structures of an object (41) by means of a feeling element (11), which, proceeding from a feeler extension (12), is associated with a coordinate measuring device, where

 a) the feeling element (11) is moved into contact with the object (40),
 b) an image of the feeling element (11) is recorded on a sensor field of an optical sensor (28) and
 c) the optical position of the feeling element (11) is determined by coordinates of the image of the feeling element (11) being linked to those of the coordinate measuring device,

**characterised in that**

d) the optical focal point (32, 32') of the at least partially shaded image of the feeling element (11) on the sensor field (28) is determined from a region of the image of the feeling element (11) on the sensor field (28) at least partially shaded by the object (41),

e) the said optical focal point is compared to the optical focal point (13) of the image of the feeling element (11) on the sensor field (28) not shaded by the object, with the same distance between the feeling element and the optical sensor,

f) the difference between the two optical focal points (13, 32, 32') is determined herefrom, and

g) the physical position of the feeling element (11) is determined from the optical position of the image of the feeling element (11) on the sensor field (28) and the difference between the two optical focal points (13, 32, 32').

2. Method according to claim 1, **characterised in that** the image of the feeling element on the sensor field is not predominantly shaded by the object and the region of the image of the feeling element on the sensor field, which is used for determining the optical focal point of the at least partially shaded image of the feeling element on the sensor field, is not shaded.

3. Method according to claim 1, **characterised in that** the image of the feeling element on the sensor field is predominantly or completely shaded by the object and the region of the image of the feeling element on the sensor field, which is used for determining the optical focal point of the at least partially shaded image of the feeling element on the sensor field, covers at least the predominant part of the image of the feeling element on the sensor field.

4. Method according to one of claims 1 to 3, **characterised in that** the region of the image of the feeling element on the sensor field, which is used for determining the optical focal point of the at least partially shaded feeling element, as long as it is displaced at right angles relative to the contacted object, remains below a fixed value just as the form tolerance of the image of the feeling element on the sensor field.

5. Method according to one of claims 1 to 4, **characterised in that** the region of the image of the feeling element on the sensor field, which is used for determining the optical focal point of the at least partially shaded image of the feeling element on the sensor field, is determined via a determining of the shading from a simulation of the shadow thrown by the object onto the sensor field.

6. Method according to claim 5, **characterised in that** geometric data of the object and of the feeling element is included for simulating the shadow thrown by the object onto the sensor field.

7. Method according to one of claims 1 to 6, **characterised in that** for determining the optical focal point of the at least partially shaded image of the feeling element on the sensor field, geometric data or surface characteristics of the object are included for simulating the light distribution along the wall of the object.

8. Method according to one of claims 1 to 7, **characterised in that** the feeling element is illuminated in such a manner that a tracer (62) is generated on the feeling element, the said tracer being shortened by the shadows (44) of the object, and the region of the image of the feeling element on the sensor field, which is used for determining the optical focal point of the at least partially shaded image of the feeling element on the sensor field, is provided by the end of the tracer (62).

9. Method according to claim 8, **characterised in that** the tracer extends at right angles relative to the edge of the object and through the central point of the image of the feeling element on the sensor field.

10. Method according to one of claims 1 to 9, **characterised in that** the values of the optical focal point of the non shaded image of the feeling element on the sensor field are taken from a table.

11. Method according to claim 10, **characterised in that** the values in the table are obtained from recording the feeling element without any shading by the object, from calculations, simulations or by interpolating such values.

12. Method according to one of claims 1 to 11, **characterised in that** the structures of the object are measured at an accuracy below 0.5 $\mu$m.

**Revendications**

1. Procédé de mesure des structures d'un objet (41) à l'aide d'un élément palpeur (11) associé à un appareil de mesure de coordonnées en partant d'un prolongement de palpeur (12) selon lequel

a) on met l'élément palpeur (11) en contact avec l'objet (41),

b) on prend une image de l'élément palpeur (11) sur un champ de capteur d'un capteur optique (28) et

c) on détermine la position optique de l'élément palpeur (11) en combinant les coordonnées de l'image de l'élément palpeur (11) à celles de l'appareil de mesure de coordonnées,
**caractérisé en ce que**

d) à partir d'une zone de l'image de l'élément palpeur (11), au moins en partie couverte par l'ombre de l'objet (41) sur le champ de capteur (28), on détermine le centre de gravité optique (32, 32') de l'image de l'élément palpeur (11) au moins en partie connecté par l'ombre sur le champ de capteur (28),

e) on compare celui-ci au centre de gravité optique (13) de l'image de l'élément palpeur (11) non couverte par l'ombre de l'objet sur le champ de capteur (28) pour la même distance de l'élément de palpeur par rapport au capteur optique,

f) on déduit la différence des deux centres de gravité optiques (13, 32, 32') et

g) on détermine la position physique de l'élément palpeur (11) à partir de la position optique de l'image de l'élément palpeur (11) sur le champ de capteur (28) et on détermine la différence des deux centres de gravité optiques (13, 32, 32').

**2.** Procédé selon la revendication 1,
**caractérisé en ce que**
l'image de l'élément palpeur sur le champ de capteur n'est pas couverte principalement par l'ombre de l'objet et la zone de l'image de l'élément palpeur sur le champ de capteur utilisé pour déterminer le centre de gravité optique au moins de l'image partiellement couverte de l'élément palpeur sur le champ de capteur n'est pas couverte par l'ombre.

**3.** Procédé selon la revendication 1,
**caractérisé en ce que**
l'image de l'élément palpeur sur le champ de capteur est couverte principalement ou complètement par l'ombre de l'objet et la région de l'image de l'élément palpeur sur le champ de capteur utilisé pour déterminer le centre de gravité optique de l'image de l'élément palpeur au moins partiellement couverte par l'ombre sur le champ de capteur, couvre au moins la partie principale de l'image de l'élément palpeur sur le champ de capteur.

**4.** Procédé selon l'une des revendications 1 à 3,
**caractérisé en ce que**
la région de l'image de l'élément palpeur sur le champ de capteur utilisé pour déterminer le centre de gravité optique de l'élément palpeur au moins partiellement couvert par l'ombre, est déplacée perpendiculairement à l'objet touché jusqu'à ce que la tolérance de forme de l'image de l'élément palpeur sur le champ de capteur reste en dessous d'une valeur fixée.

**5.** Procédé selon l'une des revendications 1 à 4,
**caractérisé en ce que**
la région de l'image de l'élément palpeur sur le champ de capteur utilisé pour déterminer le centre de gravité optique de l'image de l'élément palpeur au moins partiellement couverte par l'ombre sur le champ de capteur se détermine par la détermination de la couverture à partir d'une simulation de la projection de l'ombre de l'objet sur le champ de capteur.

**6.** Procédé selon la revendication 5,
**caractérisé en ce que**
les données géométriques de l'objet et de l'élément palpeur sont utilisées pour simuler la projection de l'ombre de l'objet sur le champ de capteur.

**7.** Procédé selon l'une des revendications 1 à 6,
**caractérisé en ce que**
pour déterminer le centre de gravité optique de l'image de l'élément palpeur au moins en partie couverte par l'ombre sur le champ de capteur, est utilisé pour les données géométriques ou les propriétés de surfaces d'objets, pour simuler la distribution de lumière le long de la paroi de l'objet.

**8.** Procédé selon l'une des revendications 1 à 7,
**caractérisé en ce que**
l'élément palpeur est éclairé pour former une trace d'éclairage (62) sur l'élément palpeur, trace qui est raccourcie par l'ombre (44) de l'objet et la région de l'image de l'élément palpeur sur le champ de capteur, utilisé pour déterminer le centre de gravité optique de l'image de l'élément palpeur au moins partiellement couverte par l'ombre sur le champ de capteur est utilisée pour déterminer la fin de la trace de la lumière (62).

**9.** Procédé selon la revendication 8,
**caractérisé en ce que**
la trace de la lumière est orthogonale à l'arête de l'objet et passe par le centre de l'image de l'élément palpeur sur le champ de capteur.

**10.** Procédé selon l'une des revendications 1 à 9,
**caractérisé en ce qu'**
on prend les valeurs du centre de gravité optique de l'image de l'élément palpeur non couverte par l'ombre sur le champ de capteur dans un tableau.

**11.** Procédé selon la revendication 10,
**caractérisé en ce qu'**
on obtient les valeurs du tableau par les prises de vue de l'élément palpeur sans projection d'ombre par l'objet, à partir du calcul de simulation ou autre valeur d'interprétation.

**12.** Procédé selon l'une des revendications 1 à 11,
**caractérisé en ce qu'**
on mesure les structures de l'objet avec une précision inférieure à 0,5 $\mu$m.

## Fig. 1

a)

b)

c)

## Fig. 2

## Fig. 3

a)

21
12
23
41
11

c)

21
12
41
11

b)

24
44
11
33

d)

24
11
41
33

e) 31
33
41

f) 31
33
41

g) 31
33
44
41

## Fig. 4

Fig. 5

Fig. 6

## Fig. 7

a)     35      b)         c)     35     d)   11

35

44

44

44    11     11      35

44     35

41     42   11    35      41      41     41

44     35    11      35     44

11      44       11

11

e)     41     f)     41     g)     41

## Fig. 8

a)          b)

43   11      46     43

31         11

31

41          46"     46'

Fig. 9

a)

b)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0988505 B1